(19)

**Europäisches Patentamt**
**European Patent Office**
**Office européen des brevets**

(11) **EP 4 633 045 A1**

(12) **EUROPEAN PATENT APPLICATION**

(43) Date of publication:
**15.10.2025 Bulletin 2025/42**

(21) Application number: **24205132.4**

(22) Date of filing: **08.10.2024**

(51) International Patent Classification (IPC):
**H04B 1/18** *(2006.01)*    **H01Q 3/26** *(2006.01)*
**H04B 7/08** *(2006.01)*

(52) Cooperative Patent Classification (CPC):
**H04B 1/18;** H04B 7/086

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.04.2024 US 202418631511**

(71) Applicant: **GlobalFoundries U.S. Inc.**
**Malta, NY 12020 (US)**

(72) Inventors:
• **Bellaouar, Abdellatif**
  **Richardson, 75094 (US)**
• **Balasubramaniyan, Arul**
  **Richardson, 75094 (US)**
• **Syed, Shafiullah**
  **Richardson, 75094 (US)**

(74) Representative: **Grünecker Patent- und**
**Rechtsanwälte**
**PartG mbB**
**Leopoldstraße 4**
**80802 München (DE)**

(54) **COMPACT BEAMFORMING RECEIVER FRONT END**

(57)    A beamforming front end (BFFE) for a receiver performs beamforming without needing to perform phase-shifting on each of a plurality of received signals. The BFFE comprises first variable gain amplifiers (VGAs) that respectively amplify the received signals by first gain values and second VGAs that respectively amplify the received signals by second gain values. Outputs of the first VGAs are combined into a first combined signal, and outputs of the second VGAs are combined into a second combined signal. The first and second combined signals are then used to produce an output signal corresponding to phase-shifting the received signals by amounts corresponding to the respective first and second gain values and then summing the results of the phase shifting. The output signal may be produced by mixing the first combined signal with an in-phase local oscillator signal and mixing the second combined signal with a quadrature local oscillator signal.

FIG. 2

**Description**

FIELD OF THE DISCLOSURE

The present disclosure relates to electronic device design, and in particular to radiofrequency (RF) receivers that perform beamforming using phase shifting.

BACKGROUND

A beamforming (BF) receiver may apply respective phase shifts to signals from a plurality of antennas (or more generally a plurality of sensors, such as optical or acoustic sensors) in order to produce directional signal reception. Phase shifting a signal having a frequency $\omega$ by a phase shift $\varphi$ may be produced using the trigonometric identity:

$$\sin(\omega t + \varphi) = a * \sin(\omega t) + b * \cos(\omega t) \qquad \textit{Equation 1}$$

where $t$ represents time and $a$ = cos(<p) and b = sin(<p). This may be performed by generating, from the incoming signal (the I signal, for "in-phase") corresponding to sin($\omega t$), a quadrature signal that is 90 degrees out of phase (the Q signal) corresponding to cos($\omega t$); multiplying each of the I and Q signals by respective values $a$ and $b$ chosen to produce the desired phase shift $\varphi$; and then combining the results of the multiplications to produce the phase shifted signal corresponding to sin($\omega t + \varphi$).

The phase shifted signal may then be combining with respectively phase shifted signals from other antennas, amplified by an RF variable gain amplifier (VGA), and down converted to an intermediate frequency for further processing.

In BF receivers of the related art, I and Q signals are generated for each antenna as part of the phase shifting process. Generation of these signals may employ electromagnetic (EM) circuits, such as Quadrature Hybrid Couplers (QHCs) and transformers. These EM circuits may be on the same semiconductor die as other electronic circuits in the BF receiver, may be quite large compared to those other circuits, and may be provided for each antenna that the BF receiver supports. As a result, the EM circuits may cause the semiconductor die to become larger, increasing the cost of the BF receiver. Furthermore, the circuitry associated with the EM circuits may consume substantial amounts of power.

Because BF receivers are now a substantial portion of the bill-of-materials cost and power consumption of popular wireless communication devices such as mobile phones, a need exists for reduction of the complexity, area, and power of BF receivers.

SUMMARY

Embodiments of the present disclosure relate to circuits and methods for use in a beamforming receiver. More specifically, the circuits and methods relate to performing beamforming by phase shifting and combining a plurality of signals.

In an embodiment, a beamforming front end (BFFE) for a receiver comprises first and second signal chains, an I combiner circuit, a proxy-quadrature (PQ) combiner circuit, and a converter circuit. The first signal chain is configured to receive a first signal, produce a first I signal by amplifying the first signal by a first I gain value, and produce a first PQ signal by amplifying the first signal by a first Q gain value, wherein the first I signal and first PQ signal are mutually in-phase, and wherein the first I gain value and first Q gain value correspond to a first phase shift. The second signal chain is configured to receive a second signal, produce a second I signal by amplifying the second signal by a second I gain value, and produce a second PQ signal by amplifying the second signal by a second Q gain value, wherein the second I signal and second PQ signal are mutually in-phase, and wherein the second I gain value and second Q gain value correspond to a second phase shift. The I combiner circuit is configured to produce a combined I signal by summing respective values of the first and second I signals. The PQ combiner circuit is configured to produce a combined PQ signal by summing respective values of the first and second PQ signals. The converter circuit is configured to produce, based on the combined I signal and combined PQ signal, an output signal corresponding to the first signal phase-shifted by the first phase shift and the second signal phase-shifted by the second phase shift.

In embodiments of the BFFE, the converter circuit comprises a quadrature local oscillator circuit configured to generate an in-phase (I) local oscillator signal and a quadrature (Q) local oscillator signal having a phase different from the I local oscillator signal; an I mixer configured to produce a converted I signal by mixing the I local oscillator signal with the combined I signal; a Q mixer configured to produce a converted Q signal by mixing the Q local oscillator signal with the combined PQ signal; and a combiner circuit configured to produce the output signal by combining the converted I signal and the converted Q signal.

In an embodiment, a method of performing beamforming in a receiver comprises producing a plurality of I signals and a plurality of PQ signals based on a plurality of received signals and a plurality of gain value pairs by, for each received signal and the corresponding gain value pair, producing the corresponding I signal by amplifying that received signal by an I gain value of that gain value pair and producing the corresponding PQ signal by amplifying that received signal by a Q gain value of that gain value pair. The corresponding I signal for each received signal has the same phase as the corresponding PQ signal for that received signal. The method further comprises producing, using the plurality of I signals, a combined I signal having a value corresponding to a sum of values of the plurality of I signals; producing, using the plurality of PQ signals, a combined PQ signal having a value corresponding to a sum of values of the plurality of PQ signals; and producing, using the combined I signal and the combined PQ signal, an output signal corresponding to a sum of the plurality of received signals respectively phase shifted by an amount corresponding to the corresponding gain value pair of the plurality of gain value pairs.

In embodiments of the method, producing the output signal comprises producing an in-phase local oscillator signal and a quadrature local oscillator signal, producing a converted I signal by mixing the in-phase local oscillator signal with the combined I signal, producing a converted Q signal by mixing the quadrature local oscillator signal with the combined PQ signal; and producing the output signal by combining the converted I and Q signals.

BRIEF DESCRIPTION OF THE DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.

FIG. 1 conceptually illustrates a beam-forming front-end (BFFE) of a BF receiver.

FIG. 2 illustrates a BFFE of a BF receiver according to an embodiment.

FIG. 3 illustrates a portion of a BFFE according to an embodiment.

FIG. 4 illustrates a portion of a BFFE according to another embodiment.

FIG. 5 illustrates a portion of a signal chain including variable gain amplifiers (VGAs) of a BFFE according to an embodiment.

FIG. 6 illustrates a current combining circuit of a BFFE according to an embodiment.

FIG. 7 illustrates a beamforming process in a BFFE according to an embodiment.

DETAILED DESCRIPTION

Illustrative embodiments of the present disclosure will be described below in more detail with reference to the accompanying drawings. The inventive features may, however, be embodied in different forms and should not be construed as limited to the embodiments set forth herein. Rather, these embodiments are provided so that this disclosure will be thorough and complete, and will fully convey the scope of the present claims to those skilled in the art. Throughout the disclosure, like reference numerals refer to like parts throughout the various figures and embodiments.

It will be understood that, although the terms "first" and/or "second" may be used herein to describe various elements, these elements should not be limited by these terms. These terms are only used to distinguish one element from another element. For instance, a first element discussed below could be termed a second element without departing from the teachings of the present disclosure. Similarly, the second element could also be termed the first element.

The drawings are not necessarily to scale and in some instances, proportions may have been exaggerated in order to clearly illustrate features of the embodiments.

Embodiments described herein relate to RF signals received through antennas and processed using antenna chains, but embodiments are not limited thereto. Accordingly, embodiments may relate to electromagnetic, optical, acoustic, or other signals received and processed through appropriate sensors and respective signal chains, wherein the signal chains include features corresponding to features of the antenna chains described herein.

In this disclosure, "electromagnetic (EM) components" refers to electrical components that rely on the interaction of magnetic fields for their operation. Such EM components include inductors, transformers, hybrid couplers, and components comprising transmission lines and/or waveguides wherein the arrangement and dimensions of the transmission lines determines the operation performed by components. Examples of the latter include Wilkinson splitters/combiners, impedance transformers, directional couplers, and the like.

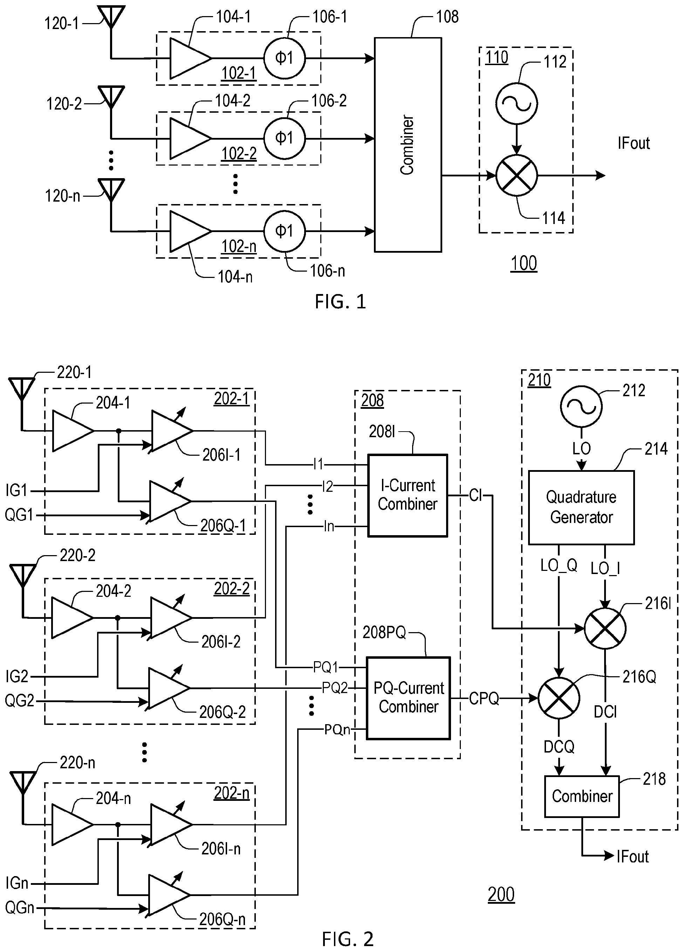

FIG. 1 conceptually illustrates the operation of a beamforming front-end (BFFE) 100 of a BF receiver. The BFFE 100 comprises N signal chains comprising antenna chains 102-1 through 102-n, where N is equal to or greater than 2, which are coupled to corresponding antennas 120-1 through 120-n. The antenna chains 102-1 through 102-n comprise RF low-noise amplifiers (LNAs) 104-1 through 104-n and phase shifters 106-1 through 106-n, respectively. The BFFE 100 further comprises a combiner 108 and an IF converter 110, the latter comprising a local oscillator 112 and a mixer 114. In embodiments, the antenna chains 102-1 through 102-n, combiner 108, and IF converter 110 are all components in the same semiconductor die, which in some embodiments may also include other circuits of the BF receiver.

Each of the antennas 120-1 through 120-n receives a radio signal from a same source. The relative phases of the radio signal as received varies according to the direction from which the radio signal arrives and the physical configuration of the antennas.

The respective signals are amplified by RF LNAs 104-1 through 104-n, phase shifted according to the desired reception pattern for the BFFE 100 by the phase shifters 106-1 through 106-n, and then combined by the combiner 108. The resulting RF signal is then mixed with the output of the local oscillator 112 by the mixer 114 and then low-pass filtered to produce the intermediate frequency (IF) signal IFout. In an illustrative example, when the RF signal has a frequency of about 28 GHz and the frequency of the local oscillator 110 is 19.5 GHz, the IF signal IFout will have a frequency of about 8.5 GHz.

To illustrate operation of the invention, an unmodulated radio signal is analyzed. For an unmodulated radio signal, the IF signal IFout would correspond to:

$$IF_{Out} = \frac{1}{2} \sum c_x \cdot \cos(t \cdot (W - LO) + \varphi_x - \Phi_x), x = 1..n \qquad \textit{Equation 2}$$

wherein W is the frequency (in radians per second) of the radio signal, LO is the frequency of the local oscillator 110, $c_x$ is a magnitude corresponding to the radio signal as received by the $x^{th}$ antenna, $\varphi_x$ corresponds to the phase shift introduced by the phase shifter of the $x^{th}$ antenna chain, and $\Phi x$ is a time corresponding to a phase shift of the radio signal as received at the $x^{th}$ antenna. When the phase shifters 106-1 through 106-n are configured so that $\varphi_x = \Phi x$, the IF signal IFout would correspond to:

$$IF_{Out} = \frac{1}{2} \sum c_x \cdot \cos(t \cdot (W - LO)) = \cos(t \cdot (W - LO)) \cdot \sum \frac{c_x}{2} \qquad \textit{Equation 3}$$

which corresponds to the down-converted radio signal multiplied by an antenna gain factor.

While embodiments effectively perform the operations performed by the elements of the BFFE 100 illustrated in FIG. 1, embodiments may split-up and re-arrange portions of the operations as described below. In particular, embodiments may not produce true (that is, actually phase-shifted) quadrature signals in the antenna chains, and may thereby eliminate the need for the large EM circuits typically used to generate quadrature signals in the antenna chains. In BF receivers that support a large number of antennas, this may produce substantial die area savings.

FIG. 2 illustrates a front-end of a BFFE 200 according to an embodiment. The BFFE comprises a plurality of antenna chains 202-1 through 202-n, a combiner 208, and an IF converter 210. In the BFFE 200, performance of the phase-shifting of the radio signals is distributed across the antenna chains 202-1 through 202-n, the combiner 208, and the IF converter 210 so that quadrature signals do not need to be generated in the antenna chains 202-1 through 202-n.

Instead, the antenna chains 202-1 through 202-n respectively generate I signals I1 through In and proxy quadrature (PQ) signals PQ1 through PQn. The I signals I1 through In are respectively produced by multiplying the radio signals by I gain (IG) values IG1 through IGn, and the PQ signals PQ1 through PQn are produced by multiplying the radio signals by Q gain (QG) values QG1 through QGn, but unlike in the Q signals in antenna chains of the related arts, the PQ signals PQ1 through PQn are not phase-shifted; that is, they are in-phase with the I signals I1 through In.

The combiner 208 independently combines the I signals I1 through In to produce a combined I signal CI and combines the PQ signals PQ1 through PQn to produce a combined I signal CPQ. The combined I signal CI and combined PQ signal CPQ correspond to:

$$CI = \sum IG_x \cdot \cos(t \cdot W + \Phi_x), \qquad x = 1..n \qquad \textit{Equation 4}$$

$$CPQ = \sum QG_x \cdot \cos(t \cdot W + \Phi_x), \qquad x = 1..n \qquad \textit{Equation 5}$$

wherein cos$(t \cdot W + \Phi x)$ corresponds to the respective radio signals having a frequency Wand phase shifts $\Phi x$ received by antenna 220-x.

The IF converter 210 performs both the phase-shifting and the down conversion of the combined I signal CI and combined PQ signal CPQ. Specifically, the IF converter 210 mixes the combined I signal CI with an in-phase local oscillator (LO) signal LO_I generated from the local oscillator output LO of the local oscillator 212, and mixes the combined PQ signal CPQ with a quadrature LO signal LO_Q generated from the local oscillator output LO. The mixer outputs are then combined to produce the IF signal IFout:

$$IF_{Out} = \Sigma \begin{pmatrix} \cos(t \cdot LO) \cdot \cos(t \cdot W + \Phi_x) \cdot IG_x + \\ \sin(t \cdot LO) \cdot \cos(t \cdot W + \Phi_x) \cdot QG_x \end{pmatrix}, \quad x = 1..n, \qquad \text{Equation 6}$$

wherein LO is the frequency of the local oscillator signals. This is equivalent to:

$$IF_{Out} = \frac{1}{2}\sum \begin{pmatrix} \cos(t \cdot (LO + W) + \Phi_x)IG_x + \sin(t \cdot (LO + W) + \Phi_x)QG_x + \\ \cos(t \cdot (LO - W) - \Phi_x)IG_x + \sin(t \cdot (LO - W) - \Phi_x)QG_x \end{pmatrix} \qquad \text{Equation 7}$$

which when filtered to eliminate the high-frequency components having frequency *LO+W* produces:

$$IF_{Out} = \frac{1}{2}\sum (\cos(t \cdot (LO - W) - \Phi_x)IG_x + \sin(t \cdot (LO - W) - \Phi_x)QG_x). \qquad \text{Equation 8}$$

Then, by using the identity in Equation 1 to determine values for each of $IG_x$ and $QG_x$ that counteract the corresponding phase shift $\Phi x$, a beamformed and down-converted IF signal IFout corresponding to Equation 3 is produced.

In more detail, for each antenna chain 202-x in the antenna chains 202-1 through 202-n, the antenna chain 202-x receives a radio signal from antenna 220-x. The radio signal is amplified by RF low-noise amplifier (LNA) 204-x. In embodiments, the RF LNA 204-1 through 204-n each include a degeneration inductor.

In embodiments, the output of the RF LNA 204-x is a balanced signal having a voltage according to the radio signal. In some embodiments, the voltage may be a differential voltage. In embodiments, the outputs of the RF LNAs 204-x are carried by transmission lines.

The output of the RF LNA 204-x is amplified by I-signal variable gain amplifier (VGA) 206I-x to produce an I signal Ix; the gain of the I-signal VGA 206I-x is determined according to the I gain signal IGx. The output of the RF LNA 204-x is also amplified by Q-signal VGA 206Q-x to produce a PQ signal PQx; the gain of the Q-signal VGA 206Q-x is determined according to the Q gain signal QGx.

In embodiments, the I-signal VGA 206I-x and the Q-signal VGA 206Q-x are transconductance amplifiers that respectively output a current corresponding to the product of the value of the output of the RF LNA 204-x and the value of the I gain signal IGx and a current corresponding to the product of the value of the output of the RF LNA 204-x and the value of the Q gain signal QGx.

In embodiments, each of the I signals Ix and the PQ signals PQx is a balanced pair of signals wherein their value corresponds to a difference between the currents of the pair of signals. In embodiments, the I signals Ix and the PQ signals PQx are carried by transmission lines.

Notably, each antenna chain 202-x only requires a single stage of amplification before the circuitry that generates the I and PQ signals used to perform phase shifting. In contrast, because of the need to generate a true quadrature signal in antenna chains of BFFEs of the related arts, the antenna chains of BFFEs of the related arts typically require multiple stages of amplification before the circuitry that generates the quadrature signal.

In the combiner 208, an I-current combiner 208I combines the first to n$^{th}$ I signals I1 through In to produce the combined I signal CI, and a PQ-current combiner 208PQ combines the first to n$^{th}$ PQ signals P1 through Pn to produce the combined PQ signal CPQ. A value of combined I signal CI may correspond to a sum of values of the first to n$^{th}$ I signals I1 through In, and a value of combined PQ signal CPQ may correspond to a sum of values of the first to n$^{th}$ PQ signals PQ1 through PQn.

Each of the I-current combiner 208I and the PQ-current combiner 208PQ may comprise a RF current combiner as known in the related arts, such as a current-mode Wilkinson combiner. In embodiments, each of the combined I signal CI and the combined PQ signal CPQ is a balanced pair of signals wherein a value corresponds to a difference between the currents of the pair of signals.

The IF converter 210 performs both the phase shifting and down conversion for the received signals, as generally described previously. In detail, the local oscillator 212 generates a local oscillator output LO, and a quadrature generator 214 generates an in-phase (I) local oscillator signal LO_I and a quadrature (Q) local oscillator signal LO_Q.

In embodiments, the quadrature generator 214 use an electromagnetic component, such as quadrature hybrid coupler, to generate the Q local oscillator signal.

In other embodiments, the quadrature generator 214 may use resistor-capacitor (RC) filters, capacitor-resistor (CR) filters, or both to generate the Q local oscillator signal; while RC/CR-filter based quadrature generation is lossy and inefficient (and may therefore be unsuitable for use earlier in the BFFE 200, such as in the antenna chains), such quadrature generators typically are substantially smaller than electromagnetic quadrature generators.

The I local oscillator signal LO_I is mixed with the combined I signal CI by the I mixer 216I to produce a down-converted combined I signal DCI. The Q local oscillator signal LO_Q is mixed with the combined QP signal CQP by the Q mixer 216Q to produce a down-converted combined Q signal DCQ. The I mixer 216I and the Q mixer 216Q may comprise a suitable mixer known in the related arts.

The down-converted combined I signal DCI and the down-converted combined Q signal DCQ are combined by the IF combiner 218. The IF combiner 218 may comprise a current combiner based on load transformer. As demonstrated by the analysis shown in Equations 1-8, above, the output of the IF combiner 218 is an IF signal IFout corresponding to the beamformed and down-converted received radio signal.

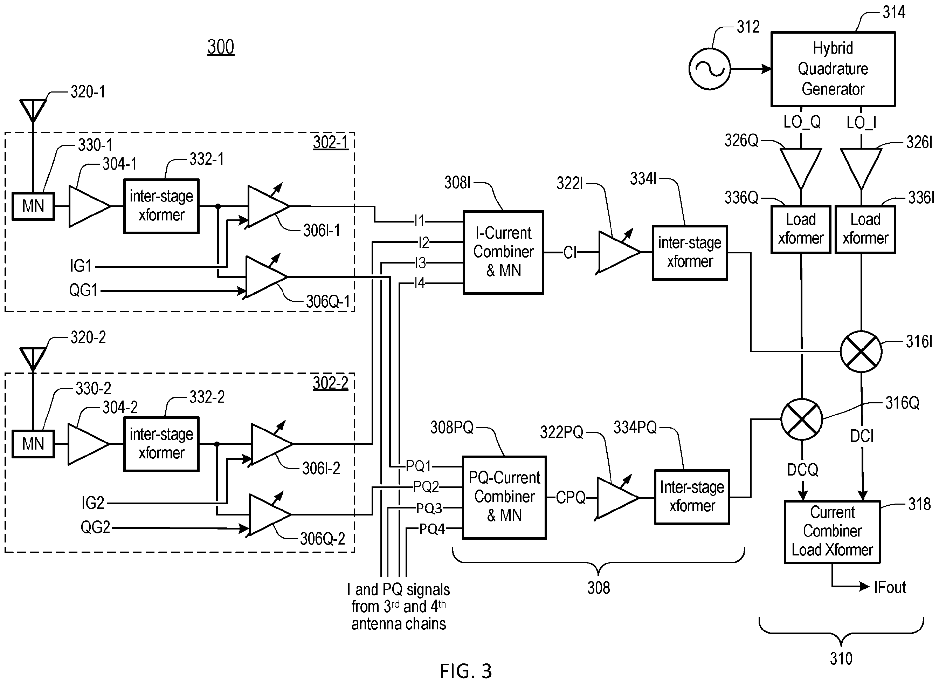

FIG. 3 illustrates a portion of a BFFE 300 of a beamforming receiver according to an embodiment. The BFFE 300 corresponds to the BFFE 200 of FIG. 2 with additional elements. Except as detailed below, elements of the BFFE 300 having reference characters of the form 3xx or 3xx-x respectively correspond to elements of the BFFE 200 having reference characters of the form 2xx or 2xx-x, and accordingly a repetitive description of such elements is omitted in the interest of brevity.

Relative to the BFFE 200 of FIG. 2, the BFFE 300 adds first and second matching networks (MNs) 330-1 and 330-2 and first and second interstage transformers 332-1 and 332-2 to the first and second antenna chains 302-1 and 302-2.

The MNs 330-1 and 330-2 operate to match the impedance of the antennas 302-1 and 302-2 to the input impedances of the RF LNAs 304-2 and 304-2, respectively. The MNs 330-1 and 330-2 may each include EM components.

The interstage transformers 332-1 and 332-2 operate to match the output impedances of the RF LNAs 304-2 and 304-2 to the input impedances of the corresponding I-signal VGAs 306I-1 and 306I-2 and Q-signal VGA 306Q-x and 306Q-2, to convert the outputs of the RF LNAs 304-2 and 304-2 to balanced outputs when the RF LNAs 304-2 and 304-2 have unbalanced outputs, or a combination thereof. The interstage transformers 332-1 and 332-2 may each include EM components.

Again relative to the BFFE 200, the BFFE 300 adds I-side VGA 322I, I-side inter-stage transformer 334I, Q-side VGA 322PQ, and Q-side inter-stage transformer 334PQ to the combiner 308. A person of ordinary skill in the art would understand the purposes and operation of these additional components. These extra VGAs help to improve the noise figure of the chain and the total maximum gain of the receiver chain. Each of the I-side inter-stage transformer 334I and the Q-side inter-stage transformer 334PQ include EM components.

Also in the combiner 308, the I-current combiner 308I and the PQ-current combiner 308PQ are each disclosed as also performing the role of matching networks.

Again relative to the BFFE 200 of FIG. 2, the BFFE 300 adds LO_I amplifier 326I, LO_I load transformer 336I, LO_Q amplifier 326Q, and LO_Q load transformer 336Q to the IF converter 310. A person of ordinary skill in the art would understand the purposes and operation of these additional components. These amplifier helps to get enough swings to the mixers after the loss due to the hybrid 318. Each of the LO_I load transformer 336I and the LO_Q load transformer 336Q include EM components.

Also, in the IF converter 310, the quadrature generator 314 is disclosed as including a quadrature hybrid coupler (QHC, also sometimes referred to as a 90° hybrid coupler). Accordingly, the quadrature generator 314 is an EM component.

Furthermore in the IF converter 310, the IF combiner 318 is disclosed as operating as a current combiner and a load transformer to match the output impedance of the IF converter 310 to the next stage of the receiver that includes the BFFE 300.

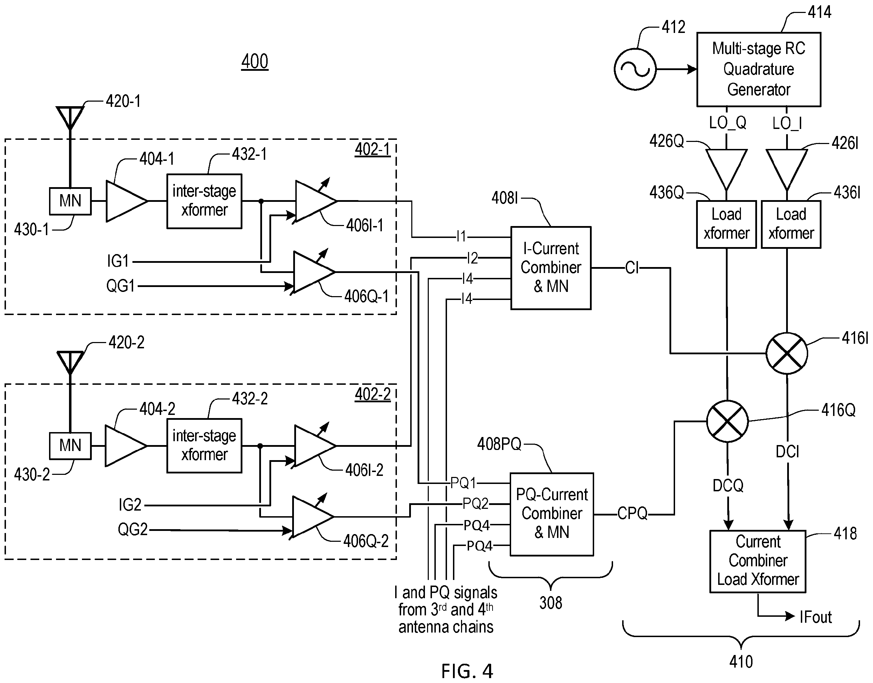

FIG. 4 illustrates a portion of a BFFE 400 of a beamforming receiver according to another embodiment. The BFFE 400 corresponds to the BFFE 300 of FIG. 3 with some alterations. Accordingly, except as detailed below, elements of the BFFE 300 having reference characters of the form 4xx or 4xx-x respectively correspond to elements of the BFFE 300 having reference characters of the form 3xx or 3xx-x, and repetitive description of such elements is omitted in the interest of brevity.

As shown in the BFFE 400, in embodiments, the outputs of the I-current combiner 208I and the PQ-current combiner 208PQ are sufficiently strong and sufficiently matched to the input impedances of the I mixer 216I and Q mixer 216Q, respectively, and accordingly the I-side VGA, I-side inter-stage transformer, Q-side VGA, and Q-side inter-stage transformer shown in FIG. 3 may not be necessary and may therefore be omitted to save die area.

Also, in the IF converter 410, the quadrature generator 414 is disclosed as being a multi-stage RC quadrature generator such as is known in the related art that uses RC and CR filters to generate the I local oscillator signal LO_I and Q local oscillator signal LO_Q having a 90° phase difference. While such quadrature generators are not well suited for use in the antenna chains of a BFFE, they are suitable for use in the IF converter 410, and may occupy less die area than a QHC based on EM components.

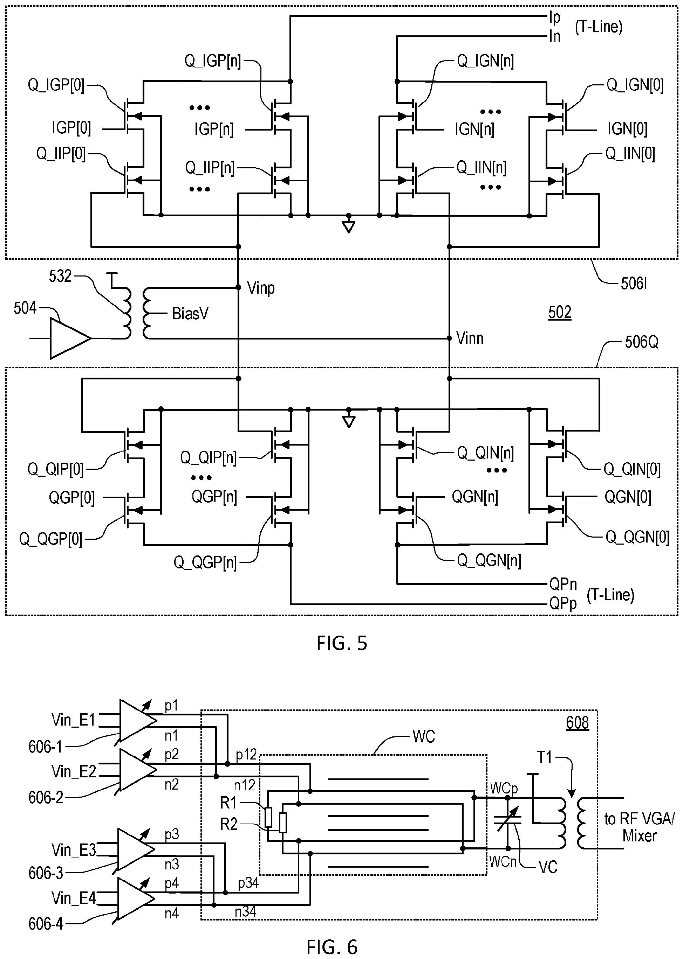

FIG. 5 illustrates digitally-controlled I-signal VGA 506I and digitally-controlled Q-signal VGA 506Q of a signal chain portion 502 of a BFFE according to an embodiment. The I-signal VGA 506I and Q-signal VGA 506Q may respectively be used in any or all of I-signal VGAs and Q-signal VGAs disclosed in FIGS. 2-4. However, embodiments are not limited to the circuit structures shown in FIG. 5.

The signal chain portion 502 of FIG. 5 includes an RF LNA 504 and inter-stage transformer 532 such as may respectively correspond to the RF LNAs and inter-stage transformers disclosed in the antenna chains shown in FIGS. 2-4. The RF LNA 504 and inter-stage transformer 532 produce a voltage-valued differential input Vinp and Vinn based on a received radio signal. A center point of the differential input Vinp and Vinn is determined by a bias voltage BiasV selected so that the input transistors of the VGAs 506I and 506Q (positive I input transistors Q_IIP[0..n], negative I input transistors Q_IIN[0..n], positive Q input transistors Q_QIP[0..n], and negative I input transistors Q_QIN[0..n]) operate in respective saturation regions appropriate to small signal amplification.

The output of the I-signal VGA 506I is current-valued balanced I signals Ip and In wherein a value is expressed as a difference between the currents in the Ip and In signals. The output of the Q-signal VGA 506I is current-valued balanced QP signals QPp and QPn wherein a value is expressed as a difference between the currents in the QPp and QPn signals. Notably, all of the I signals Ip and In and QP signals QPp and QPn have the same phase.

The I-signal VGA 506I comprises the positive I input transistors Q_IIP[0..n], the negative I input transistors Q_IIN[0..n], positive I gain transistors Q_IGP[0..n], and negative I gain transistors Q_IGN[0..n], where n is a natural number greater than or equal to 2. The Q-signal VGA 506Q comprises the positive Q input transistors Q_QIP[0..n], the negative I input transistors Q_QIN[0..n], positive I gain transistors Q_QGP[0..n], and negative I gain transistors Q_QGN[0..n].

The operation of the I-signal VGA 506I and the Q-signal VGA 506Q are identical except that the I-signal VGA 506I determines its gain according to the p-out I gain signals IGP[0..n] and n-out I gain signals IGN[0..n], while the Q-signal VGA 506Q determines its gain according to the p-out Q gain signals QGP[0..n] and n-out Q gain signals g[0..n]. Accordingly, the operation of the I-signal VGA 506I will be described, and because a person of ordinary skill in the art would understand the operation of the Q-signal VGA 506Q therefrom, a description of the operation of the Q-signal VGA 506Q will be omitted in the interest of brevity.

The positive I input transistors Q_IIP[0..n] of the I-signal VGA 506I each have gates coupled to the positive differential input Vinp, sources coupled to ground, and drains respectively coupled to sources of the positive I gain transistors Q_IGP[0..n]. The negative I input transistors Q_IIN[0..n] of the I-signal VGA 506I each have gates coupled to the negative differential input Vinn, sources coupled to ground, and drains respectively coupled to sources of the negative I gain transistors Q_IGN[0..n]. The I input transistors Q_IIP[0..n] and Q_IIN[0..n] ideally operate as linear transconductance amplifiers, each sinking a current proportional to the respective input voltage at their gate when the corresponding transistor among the I gain transistors Q_IGP[0..n] and Q_IGN[0..n] is turned on.

The positive I gain transistors Q_IGP[0..n] each have drains coupled to the positive I signal Ip and gates respectively coupled to the positive I gain signals IGP[0..n]. The negative I gain transistors Q_IGN[0..n] each have drains coupled to the negative I signal In and gates respectively coupled to the negative I gain signals IGN[0..n]. The I gain transistors Q_IGP[0..n] and Q_IGN[0..n] operate as switches, turning on when the corresponding signal of the I gain signals IGP[0..n] and IGN[0..n] has a value corresponding to a logical 1 and turning off when that signal has a value corresponding to a logical 0.

In an embodiment, all of the I input transistors Q_IIP[0..n] and Q_IIN[0..n] have the same voltage-to-current gain, and in such an embodiment the current sunk through the positive I signal Ip corresponds to the voltage of the positive differential input Vinp times the number of positive I gain signals IGP[0..n] having a logical 1 value and the current sunk through the negative I signal In corresponds to the voltage of the negative differential input Vinn times the number of negative I gain signals IGN[0..n] having a logical 1 value. In an embodiment, the I-signal VGA 506I may be controlled to produce a positive voltage-to-current gain by having one or more of the positive I gain signals IGP[0..n] have the logical 1 value and having all of the negative I gain signals IGN[0..n] have a logical 0 value, and may be controlled to produce a negative voltage-to-current gain by having all of the positive I gain signals IGP[0..n] have the logical 0 value and one or more of the negative I gain signals IGN[0..n] have a logical 1 value.

FIG. 6 illustrates a current combining circuit 608 of a BFFE according to an embodiment. FIG. 6 shows a circuit for combining I or QP signals from four signal chains, but embodiments are not limited thereto.

An instantiation of the current combining circuit 608 may be included in the I-current combiner 208-I, the PQ-current combiner 208PQ, or both of FIG. 2; included in the I-current combiner 308-I, the PQ-current combiner 308PQ, or both of FIG. 3, or included in the I-current combiner 408-I, the PQ-current combiner 408PQ, or both of FIG. 4, according to embodiments.

The current combining circuit 608 receives first through fourth current-valued differential signals from first through fourth VGAs 606-1 through 606-4, respectively. The first through fourth differential signals respectively include first through fourth positive signals p1 through p4 and first through fourth negative signals n1 through n4.

When the current combining circuit 608 is incorporated into an I-current combiner, the first through fourth VGAs 606-1 through 606-4 may correspond to I-signal VGAs from first through fourth signal chains. When the current combining circuit 608 is incorporated into an PQ-current combiner, the first through fourth VGAs 606-1 through 606-4 may correspond to Q-signal VGAs from first through fourth signal chains. Accordingly, the current combining circuit 608 receives either a plurality of differential I-signals (when incorporated in an I-current combiner) or a plurality of differential PQ-signals (when incorporated into a PC-current combiner), but does not receive a combination of I-Signals and PQ-signals.

In the illustrated embodiment, first VGA 606-1 and second VGA 606-2 are in physically adjacent signal chains in an integrated circuit, and the current combining circuit combines the first positive signal p1 and the second positive signal p2 into upper positive signal p12 by wiring them together, and combines the first negative signal n1 and the second negative signal n2 into upper negative signal n12 by wiring them together. Similarly, third VGA 606-3 and fourth VGA 606-4 are in physically adjacent signal chains in an integrated circuit, and the current combining circuit combines the third positive signal p3 and the fourth positive signal p4 into lower positive signal p34 by wiring them together, and combines the third negative signal n3 and the fourth negative signal n4 into lower negative signal n34 by wiring them together.

The upper positive signal p12 and upper negative signal n12 are provided to a Wilkinson combiner WC as a first differential transmission line signal. The lower positive signal p34 and lower negative signal n34 are provided to the Wilkinson combiner WC as a second differential transmission line signal. In embodiments, the upper positive signal p12, upper negative signal n12, lower positive signal p34, and lower negative signal n34 each only sink current, with the source of the current being the center tap of the primary coil of a transformer T1. As a result, the Wilkinson combiner WC produces a current-valued differential output having a differential current corresponding to a sum of currents of the first through fourth positive signals p1 through p4 minus a sum of currents of the first through fourth negative signals n1 through n4, which produces a corresponding differential voltage across Wilkinson combiner positive output WCp and Wilkinson combiner negative output WCn.

A tunable capacitor VC in included in some embodiments of the current combining circuit 608 to tune the frequency response at the output of transformer T1 to the desired center frequency; in embodiments, the tunable capacitor VC may be digitally tunable. First and second resistors R1 and R2 are components of the Wilkinson combiner WC as is known in the related art.

The transformer T1 provides impedance matching between the output of the Wilkinson combiner WC and RF amplifiers or mixers that may receive the output of the current combining circuit 608. A center tap of the transformer T1 serves as a source of the currents that flow through the Wilkinson combiner WC and are then sunk by the first through fourth VGAs 606-1 through 606-4.

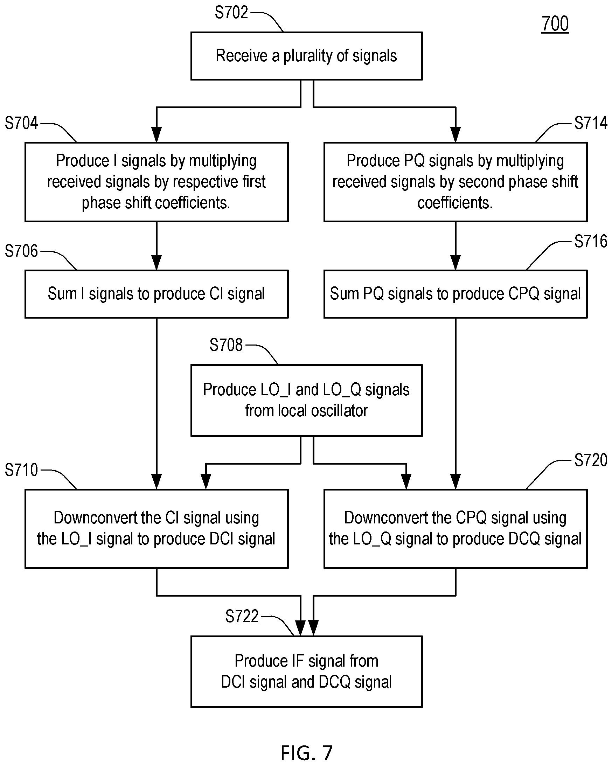

FIG. 7 illustrates a beamforming process 700 in a BFFE according to an embodiment. The steps of the beamforming process 700 may be performed by any of the BFFE embodiments illustrated by FIGS. 2-4, but embodiments are not limited thereto.

At S702, the process 700 receives a plurality of signals from a plurality of respective antennas. The plurality of signals may correspond to a single transmission that is received at the plurality of antennas at respective phase shifts corresponding to the direction from which the transmission was received.

At S704, the plurality of signals are respectively multiplied by a plurality of first phase shift coefficients to produce a plurality of I signals.

At S714, the plurality of signals are respectively multiplied by a plurality of second phase shift coefficients to produce a plurality of PQ signals.

The first phase shift coefficients and second phase shift coefficients are selected according to the respective phases shifts of the received signals where the phase shifts correspond to the direction from which the transmission was received.

Although the first and second phase shift coefficients for each received signal correspond to values that, when respectively multiplied by in-phase and quadrature signals corresponding to that received signal, would compensate for the phase shift of that received signal, the I signals and PQ signals produced at S704 and S714 are not phase shifted relative to each other.

At S706, the plurality of I signals are combined to produce a combined I signal CI having a value corresponding to a sum of values of the I signals.

At S716, the plurality of PQ signals are summed to produce a combined PQ signal CPQ having a value corresponding to a sum of values of the PQ signals.

At S708, a local oscillator I signal LO_I and a local oscillator Q signal LO_Q are produced from a local oscillator. The local oscillator I signal LO_I has a different phase than the local oscillator Q signal LO_Q. In embodiments, the local oscillator Q signal LO_Q is 90° ($\pi/2$ radians, or one-quarter period) out of phase with the local oscillator I signal LO_I.

At S710, the local oscillator I signal LO_I and the combined I signal CI are mixed together to produce a down-converted I signal DCI.

At S720, the local oscillator Q signal LO_Q and the combined QP signal CPQ are mixed together to produce a down-converted Q signal DCQ. As shown by Equations 1 through 8, above, because the local oscillator Q signal LO_Q is a quadrature signal, even though no quadrature signals were generated for each of the received signals, the down-converted Q signal DCQ corresponds to a sum of respectively scaled quadrature signals corresponding to the received signals, where the scaling corresponds to the respective second phase shift coefficient.

At S722, the down-converted I signal DCI and down-converted Q signal DCQ are used to produce an intermediate frequency (IF) signal using means known in the related art to sum the down-converted I signal DCI with the down-converted Q signal DCQ.

As described above, embodiments include RF beam-forming front ends for RF receivers that do not perform quadrature signal generation for individual signals used in the beamforming process, and that therefore do not require the generation of respective phase-shifted quadrature signals for the plurality of antennas receiving the signal used in the beam-forming. As a result, the need for large quadrature generation circuits, such as QHCs, in each antenna chain of the BFFE is eliminated, resulting in the antenna chains being simpler, consuming less power, and requiring less area to implement on, for example, a single integrated circuit within which the entirety of the BFFE may be implemented.

Embodiments accomplish the above by producing, from each received signal in each antenna chain involved in the beamforming, an I signal and a proxy-Q (PQ) signal, wherein the I signal corresponds to that received signal scaled by a first coefficient corresponding to a desired phase shift and the PQ signal corresponds to that received signal scaled by a second coefficient corresponding to the desired phase shift, and wherein the I signal and the PQ signal have the same phase. Embodiments then sum the I signals from each antenna chain to produce a combined I signal, sum the PQ signals from each antenna chain to produce a combined PQ signal, and effectively perform the respective phase shifts on the received signals as part of the process of combining the combined I signal and the combined PQ signal. In embodiments, the process of combining the combined I signal and the combined PQ signal includes a quadrature transformation (such as is performed by mixing in the illustrated embodiments) to produce the required phase shift. In embodiments, effectively performing the respective phase shifts on the received signals is performed in conjunction with down-conversion to an intermediate frequency by mixing the combined I signal with an in-phase local oscillator signal, mixing the combined PW signal with a quadrature local oscillator signal having a phase shift relative to the an in-phase local oscillator signal, and summing the mixing results.

Aspects of the present disclosure have been described in conjunction with the specific embodiments thereof that are proposed as examples. Numerous alternatives, modifications, and variations to the embodiments as set forth herein may be made without departing from the scope of the claims set forth below. Accordingly, embodiments as set forth herein are intended to be illustrative and not limiting.

A beamforming front end (BFFE) for a receiver performs beamforming without needing to perform phase-shifting on each of a plurality of received signals. The BFFE comprises first variable gain amplifiers (VGAs) that respectively amplify the received signals by first gain values and second VGAs that respectively amplify the received signals by second gain values. Outputs of the first VGAs are combined into a first combined signal, and outputs of the second VGAs are combined into a second combined signal. The first and second combined signals are then used to produce an output signal corresponding to phase-shifting the received signals by amounts corresponding to the respective first and second gain values and then summing the results of the phase shifting. The output signal may be produced by mixing the first combined signal with an in-phase local oscillator signal and mixing the second combined signal with a quadrature local oscillator signal.

In summary, a beamforming front end (BFFE) for a receiver performs beamforming without needing to perform phase-shifting on each of a plurality of received signals is provided. The BFFE comprises first variable gain amplifiers (VGAs) that respectively amplify the received signals by first gain values and second VGAs that respectively amplify the received signals by second gain values. Outputs of the first VGAs are combined into a first combined signal, and outputs of the second VGAs are combined into a second combined signal. The first and second combined signals are then used to produce an output signal corresponding to phase-shifting the received signals by amounts corresponding to the respective first and second gain values and then summing the results of the phase shifting. The output signal may be produced by mixing the first combined signal with an in-phase local oscillator signal and mixing the second combined signal with a quadrature local oscillator signal.

The following embodiments are explicitly disclosed.

Embodiment 1:

A beamforming front end (BFFE) for a receiver, the BFFE comprising:

a first signal chain configured to receive a first signal, produce a first I signal by amplifying the first signal by a first I gain value, and produce a first PQ signal by amplifying the first signal by a first Q gain value, wherein the first I signal and first PQ signal are mutually in-phase and the first I gain value and first Q gain value correspond to a first phase shift;
a second signal chain configured to receive a second signal, produce a second I signal by amplifying the second signal by a second I gain value, and produce a second PQ signal by amplifying the second signal by a second Q gain value, wherein the second I signal and second PQ signal are mutually in-phase and the second I gain value and second Q gain value correspond to a second phase shift;

an I combiner circuit configured to produce a combined I signal by summing respective values of the first and second I signals;

a PQ combiner circuit configured to produce a combined PQ signal by summing respective values of the first and second PQ signals; and

a converter circuit configured to produce, based on the combined I signal and combined PQ signal, an output signal corresponding to the first signal phase-shifted by the first phase shift and the second signal phase-shifted by the second phase shift.

Embodiment 2:

The BFFE of embodiment 1, wherein the converter circuit comprises:

a quadrature local oscillator circuit configured to generate an in-phase (I) local oscillator signal and a quadrature (Q) local oscillator signal having a phase different than the I local oscillator signal;

an I mixer configured to produce a converted I signal by mixing the I local oscillator signal with the combined I signal;

a Q mixer configured to produce a converted Q signal by mixing the Q local oscillator signal with the combined PQ signal; and

a combiner circuit configured to produce the output signal by combining the converted I signal and the converted Q signal.

Embodiment 3:

The BFFE of embodiment 2, wherein the Q local oscillator signal is 90° out of phase with the I local oscillator signal.

Embodiment 4:

The BFFE of embodiment 2 or 3, wherein the quadrature local oscillator circuit comprise:

a local oscillator producing a local oscillator signal; and

a quadrature generator producing the Q local oscillator signal from the local oscillator signal.

Embodiment 5:

The BFFE of embodiment 4, wherein the quadrature generator comprises a hybrid quadrature generator.

Embodiment 6:

The BFFE of embodiment 4 or 5, wherein the quadrature generator comprises a resistive-capacitive (RC) quadrature generator having one or more stages.

Embodiment 7:

The BFFE of one of embodiments 4 to 6, wherein the quadrature generator comprises a delay line.

Embodiment 8:

The BFFE of one of embodiments 2 to 7, wherein the combiner circuit includes a current combiner circuit configured to combine a current of converted I signal with a current of the converted Q signal.

Embodiment 9:

The BFFE of one of embodiments 1 to 8,

wherein the first signal chain comprises:

a first I Variable Gain Amplifier (VGA) configured to produce the first I signal by amplifying the first signal by the first I gain value, and
a first Q VGA configured to produce the first PQ signal by amplifying the first signal by the first Q gain value; and wherein the second signal chain comprises:

a second I VGA configured to produce the second I signal by amplifying the second signal by the second I gain value, and
a second Q VGA configured to produce the second PQ signal by amplifying the second signal by the second Q gain value.

Embodiment 10:

The BFFE of embodiment 9, wherein the first I VGA, the second I VGA, the first Q VGA, and the second Q VGA respectively comprise variable gain transconductance amplifiers having digitally controlled gains.

Embodiment 11:

The BFFE of one of embodiments 1 to 10, wherein the first I signal, the second I signal, the first PQ signal, and the second PQ signal each comprise current-mode differential signals.

Embodiment 12:

The BFFE of one of embodiments 1 to 11, wherein the I combiner circuit, the PQ combiner circuit, or both comprise a Wilkinson combiner.

Embodiment 13:

The BFFE of one of embodiments 1 to 12, wherein the BFFE is implemented within a single integrated circuit chip.

Embodiment 14:

The BFFE of one of embodiments 1 to 13, further comprising:

the first signal chain being physically adjacent to the second signal chain;
a third signal chain configured to receive a third signal and comprising:

a third I VGA configured to produce a third I signal by amplifying the third signal by a third I gain value, and
a third Q VGA configured to produce a third PQ signal by amplifying the third signal by a third Q gain value, wherein the third I signal and third PQ signal are mutually in-phase, and
wherein the third I gain value and third Q gain value are configured to produce a third phase shift;

the I combiner circuit configured to sum respective values of the first through third I signals to produce the combined I signal by:

connecting the first and second I signals to an I transmission line (T-line), and
combining the signal on the first I T-line with a signal corresponding to the third I signal using a first Wilkinson combiner;

the PQ combiner circuit configured to sum respective values of the first through third PQ signals to produce the combined PQ signal by

connecting the first and second PQ signals to a first PQ T-line, and
combining the signal on the first PQ T-line with a signal corresponding to the third I signal using a second Wilkinson combiner; and

the converter circuit configured to produce, based on the combined I signal and combined PQ signal, an output signal corresponding to the first through third signals respectively phase-shifted by the first through third phase shifts.

Embodiment 15:

A method of performing beamforming in a receiver, the method comprising:

producing a plurality of I signals and a plurality of PQ signals based on a plurality of received signals and a plurality of gain value pairs by, for each received signal and the corresponding gain value pair:

producing the corresponding I signal by amplifying that received signal by an I gain value of that gain value pair, and

producing the corresponding PQ signal by amplifying that received signal by a Q gain value of that gain value pair;

producing, using the plurality of I signals, a combined I signal having a value corresponding to a sum of values of the plurality of I signals;
producing, using the plurality of PQ signals, a combined PQ signal having a value corresponding to a sum of values of the plurality of PQ signals; and
producing, using the combined I signal and the combined PQ signal, an output signal corresponding to a sum of the plurality of received signals respectively phase shifted by an amount corresponding to the corresponding gain value pair of the plurality of gain value pairs,
wherein the corresponding I signal for each received signal has the same phase as the corresponding PQ signal for that received signal.

Embodiment 16:

The method of embodiment 15, wherein producing, using the combined I signal and the combined PQ signal, the output signal comprises:

producing an in-phase local oscillator signal and a quadrature local oscillator signal;
producing a converted I signal by mixing the in-phase local oscillator signal with the combined I signal;
producing a converted Q signal by mixing the quadrature local oscillator signal with the combined PQ signal; and
producing the output signal by combining the converted I and Q signals.

Embodiment 17:

The method of embodiment 15 or 16, wherein the BFFE of one of embodiments 1 to 14 is employed. Herein, the BFFE of one of embodiments is used when performing beamforming in the receiver. The receiver may comprise the BFFE of one of embodiments 1 to 14.

**Claims**

1. A beamforming front end (BFFE) for a receiver, the BFFE comprising:

a first signal chain configured to receive a first signal, produce a first I signal by amplifying the first signal by a first I gain value, and produce a first PQ signal by amplifying the first signal by a first Q gain value, wherein the first I signal and first PQ signal are mutually in-phase and the first I gain value and first Q gain value correspond to a first phase shift;
a second signal chain configured to receive a second signal, produce a second I signal by amplifying the second signal by a second I gain value, and produce a second PQ signal by amplifying the second signal by a second Q gain value, wherein the second I signal and second PQ signal are mutually in-phase and the second I gain value and second Q gain value correspond to a second phase shift;
an I combiner circuit configured to produce a combined I signal by summing respective values of the first and second I signals;
a PQ combiner circuit configured to produce a combined PQ signal by summing respective values of the first and second PQ signals; and
a converter circuit configured to produce, based on the combined I signal and combined PQ signal, an output signal corresponding to the first signal phase-shifted by the first phase shift and the second signal phase-shifted by the second phase shift.

2. The BFFE of claim 1, wherein the converter circuit comprises:

a quadrature local oscillator circuit configured to generate an in-phase (I) local oscillator signal and a quadrature (Q) local oscillator signal having a phase different than the I local oscillator signal;
an I mixer configured to produce a converted I signal by mixing the I local oscillator signal with the combined I signal;
a Q mixer configured to produce a converted Q signal by mixing the Q local oscillator signal with the combined PQ signal; and
a combiner circuit configured to produce the output signal by combining the converted I signal and the converted Q signal.

3. The BFFE of claim 2, wherein the Q local oscillator signal is 90° out of phase with the I local oscillator signal.

4. The BFFE of claim 2, wherein the quadrature local oscillator circuit comprise:

a local oscillator producing a local oscillator signal; and
a quadrature generator producing the Q local oscillator signal from the local oscillator signal.

5. The BFFE of claim 4, wherein the quadrature generator comprises at least one of a hybrid quadrature generator, a resistive-capacitive (RC) quadrature generator having one or more stages, and a delay line.

6. The BFFE of one of claims 2 to 5, wherein the combiner circuit includes a current combiner circuit configured to combine a current of converted I signal with a current of the converted Q signal.

7. The BFFE of one of claims 1 to 6,

wherein the first signal chain comprises:

a first I Variable Gain Amplifier (VGA) configured to produce the first I signal by amplifying the first signal by the first I gain value, and
a first Q VGA configured to produce the first PQ signal by amplifying the first signal by the first Q gain value; and

wherein the second signal chain comprises:

a second I VGA configured to produce the second I signal by amplifying the second signal by the second I gain value, and
a second Q VGA configured to produce the second PQ signal by amplifying the second signal by the second Q gain value.

8. The BFFE of claim 7, wherein the first I VGA, the second I VGA, the first Q VGA, and the second Q VGA respectively comprise variable gain transconductance amplifiers having digitally controlled gains.

9. The BFFE of one of claims 1 to 8, wherein the first I signal, the second I signal, the first PQ signal, and the second PQ signal each comprise current-mode differential signals.

10. The BFFE of one of claims 1 to 9, wherein the I combiner circuit, the PQ combiner circuit, or both comprise a Wilkinson combiner.

11. The BFFE of one of claims 1 to 10, wherein the BFFE is implemented within a single integrated circuit chip.

12. The BFFE of one of claims 1 to 11, further comprising:

the first signal chain being physically adjacent to the second signal chain;
a third signal chain configured to receive a third signal and comprising:

a third I VGA configured to produce a third I signal by amplifying the third signal by a third I gain value, and
a third Q VGA configured to produce a third PQ signal by amplifying the third signal by a third Q gain value,

13

wherein the third I signal and third PQ signal are mutually in-phase, and
wherein the third I gain value and third Q gain value are configured to produce a third phase shift;

the I combiner circuit configured to sum respective values of the first through third I signals to produce the combined I signal by:

connecting the first and second I signals to an I transmission line (T-line), and
combining the signal on the first I T-line with a signal corresponding to the third I signal using a first Wilkinson combiner;

the PQ combiner circuit configured to sum respective values of the first through third PQ signals to produce the combined PQ signal by

connecting the first and second PQ signals to a first PQ T-line, and
combining the signal on the first PQ T-line with a signal corresponding to the third I signal using a second Wilkinson combiner; and

the converter circuit configured to produce, based on the combined I signal and combined PQ signal, an output signal corresponding to the first through third signals respectively phase-shifted by the first through third phase shifts.

13. A method of performing beamforming in a receiver, the method comprising:

producing a plurality of I signals and a plurality of PQ signals based on a plurality of received signals and a plurality of gain value pairs by, for each received signal and the corresponding gain value pair:

producing the corresponding I signal by amplifying that received signal by an I gain value of that gain value pair, and
producing the corresponding PQ signal by amplifying that received signal by a Q gain value of that gain value pair;

producing, using the plurality of I signals, a combined I signal having a value corresponding to a sum of values of the plurality of I signals;
producing, using the plurality of PQ signals, a combined PQ signal having a value corresponding to a sum of values of the plurality of PQ signals; and
producing, using the combined I signal and the combined PQ signal, an output signal corresponding to a sum of the plurality of received signals respectively phase shifted by an amount corresponding to the corresponding gain value pair of the plurality of gain value pairs,
wherein the corresponding I signal for each received signal has the same phase as the corresponding PQ signal for that received signal.

14. The method of claim 13, wherein producing, using the combined I signal and the combined PQ signal, the output signal comprises:

producing an in-phase local oscillator signal and a quadrature local oscillator signal;
producing a converted I signal by mixing the in-phase local oscillator signal with the combined I signal;
producing a converted Q signal by mixing the quadrature local oscillator signal with the combined PQ signal; and
producing the output signal by combining the converted I and Q signals.

15. The method of claim 13 or 14, wherein the BFFE of one of claims 1 to 12 is employed.

FIG. 1

FIG. 2

FIG. 3

FIG. 4

FIG. 5

FIG. 6

S702

Receive a plurality of signals

700

S704

Produce I signals by multiplying received signals by respective first phase shift coefficients.

S714

Produce PQ signals by multiplying received signals by second phase shift coefficients.

S706

Sum I signals to produce CI signal

S716

Sum PQ signals to produce CPQ signal

S708

Produce LO_I and LO_Q signals from local oscillator

S710

Downconvert the CI signal using the LO_I signal to produce DCI signal

S720

Downconvert the CPQ signal using the LO_Q signal to produce DCQ signal

S722

Produce IF signal from DCI signal and DCQ signal

FIG. 7

Europäisches
Patentamt

European
Patent Office

Office européen
des brevets

# EUROPEAN SEARCH REPORT

**Application Number**

EP 24 20 5132

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/119689 A1 (PARAMESH JEYANANDH [US] ET AL) 22 April 2021 (2021-04-22) * paragraphs [0004], [0009], [0022], [0023]; figures 4,5 * | 1-15 | INV. H04B1/18 ADD. |
| A | CN 108 736 949 A (TEXAS INSTRUMENTS INC) 2 November 2018 (2018-11-02) * figures 12,13 * | 1-15 | H01Q3/26 H04B7/08 |

TECHNICAL FIELDS
SEARCHED        (IPC)

H04B
H01Q

The present search report has been drawn up for all claims

| Place of search | Date of completion of the search | Examiner |
|---|---|---|
| Munich | 1 April 2025 | Marques, Gabriela |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 24 20 5132

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | | Publication date |
|---|---|---|---|---|
| US 2021119689 A1 | 22-04-2021 | US | 2019253126 A1 | 15-08-2019 |
| | | US | 2020313749 A1 | 01-10-2020 |
| | | US | 2021119689 A1 | 22-04-2021 |
| CN 108736949 A | 02-11-2018 | CN | 108736949 A | 02-11-2018 |
| | | US | 9960883 B1 | 01-05-2018 |

EPO FORM P0459

For more details about this annex : see Official Journal of the European Patent Office, No. 12/82